# EUROPEAN PATENT SPECIFICATION

(11) **EP 0 479 622 B1**
(45) Date of publication and mention of the grant of the patent: **06.09.1995**
(21) Application number: 91309147.6
(22) Date of filing: 04.10.1991
(51) Int. Cl.: G01N 35/04, G06K 7/10

(54) **Identification code reader for a sample container**
Erkennungscode-Leser für Probenbehälter
Lecteur de code d'identification pour récipients d'échantillons

(30) Priority: 05.10.1990 JP 105318/90
(43) Date of publication of application: 08.04.1992
(73) Proprietor: TOA MEDICAL ELECTRONICS CO., LTD., Chuoku, Kobe (JP)
(72) Inventor: Demachi, Takachi, Tarumiki, Kobe (JP)
(74) Representative: Price, Paul Anthony King

(56) References cited:
- WO-A-83/00393
- JP-A-57 199 958
- US-A- 4 622 457

## Description

The present invention relates to an identification code reader for reading an identification code, such as a bar code, attached to a sample container for supplying blood or the like to a sample analyzer. The present invention also relates to a method of reading such an identification code.

To prevent any mistake in the sampling procedure, current practice requires a bar code label or similar identification label to be glued to the outer wall of the sample container. The code marked on this label is read by a code reader installed in a blood analyzer or a smeared sample preparation unit.

If the sample container having the bar code label is merely set in the sample rack, the bar code label can face in any direction. However, the code cannot be read unless the label is correctly facing the bar code reader.

To eliminate reading error, a known device for reading bar codes rotates and lifts the sample container (see Japanese Laid-open Patent Sho. 57-199958 and US-4,622,457 and WO-83/00393).

When the bar code label is glued neatly, rotating the sample container enables the bar code to be read regardless of the label position.

However, when the edge of the label is slightly peeled, the peeled portion may become stuck in the sample rack as the sample container is rotated, and hence the bar code cannot be read.

According to a first aspect of the present invention, there is provided an identification code reader for reading an identification code on a sample container in a sample rack, the identification code reader comprising: a driving member for driving the sample container; rotary means for rotating the driving member; up and down movement means for moving the driving member up and down; rotational/up and down movement control means for controlling the rotary means and up and down movement means; identification code reader means for reading the identification code on the sample container; and reading control means connected to the identification code reader means for controlling reading of the identification code as the sample container is rotated; the reading control means and rotational/up and down movement control means being arranged to bring the driving member into engagement with the sample container, and to rotate the sample container in a forward direction whilst the reader means attempts to read the identification code; characterized in that the reading control means and rotational/up and down movement control means are arranged, if the code is not read whilst the sample container is rotated in the forward direction, to rotate the sample container in a reverse direction whilst the reader means again attempts to read the identification code.

If the driving member is an elastic member that is engageable with the top of the sample container, it may be given a convex bottom in order to improve the engagement.

According to a second aspect of the present invention, there is provided a method of reading an identification code on a sample container in a sample rack, comprising the steps of: lowering a driving member into engagement with the upper end of the sample container whilst the sample container is sitting in the sample rack; using the driving member to rotate the sample container in a forward direction and making a first attempt to read the code through an opening in the side of the sample rack; and, if the first reading attempt is not successful, using the driving member to rotate the sample container in a reverse direction and making a second attempt to read the code through the opening in the side of the sample rack.
Fig. 1 is a side view showing a preferred embodiment of an identification code reader for a sample container in accordance with the invention (as seen from the direction of arrow A in Fig. 3);
Fig. 2 is a magnified view around the sample container (as seen from the direction of arrow B in Fig. 3); and
Fig. 3 is a schematic plan view showing the code reader as part of a comprehensive hematological examination system.

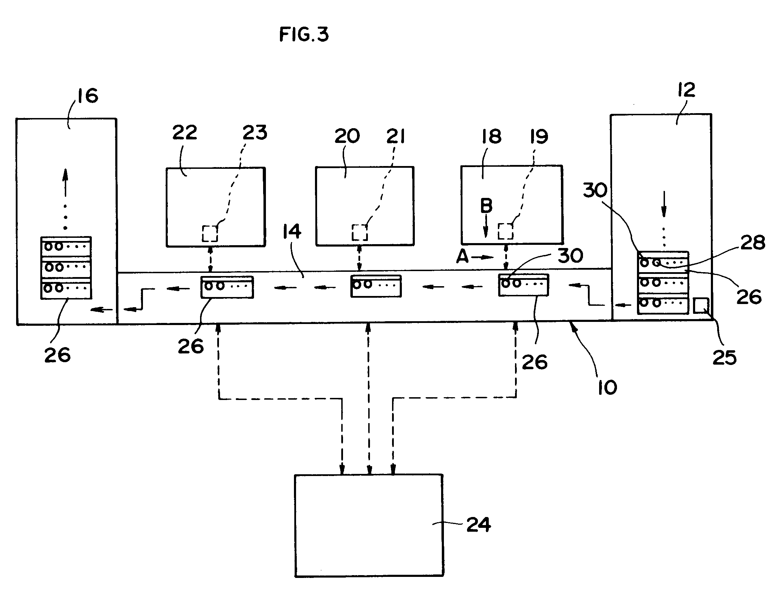

In Fig. 3, numeral 10 denotes sample rack transportation means, and this rack transportation means 10 comprises a rack start unit 12, a conveyor unit 14, and a rack stock unit 16. Transportation is done, for example, by belt conveyor system. A sample rack 26 is shaped like a test tube stand for accommodating plural, for example, ten sample containers 28, and has an opening 30 at the rack side surface so that the bar code label or similar label glued to the outer wall of the sample container 28 to distinguish from others may be read from outside the rack. An example thereof is disclosed in Japanese Laid-open Patent Sho. 63-217273. The sample container 28 may be used with or without a plug in its upper opening.

The plug is made of rubber or synthetic resin. It is hereinafter referred to merely as a rubber plug. Anyway, the sample in the container may be stirred or sucked up using known technology.

In the first place, the racks containing sample containers are arranged in a parallel row in the rack start unit 12, and a start switch 25 is pushed. Then the racks advance downward in Fig. 3, and the first rack is sent on to the conveyor unit 14 at the left side. Numeral 24 is a controller.

Facing the transfer unit 14, both upstream and downstream of the rack flow, there are disposed blood analyzer 18 such as blood corpuscle analyzer (e.g. model NE-8000 of Toa Medical Electronics), blood analyzer 20 such as reticulate red blood corpuscle analyzer (e.g. model R-1000 of Toa Medical Electronics), smeared sample generator 22 (e.g. model SP-1 of Toa Medical Electronics), and others. The NE-8000 is a blood corpuscle analyzer capable of obtaining leukocyte data in five classifications, in addition to the conventional blood cell countings; the R-1000 is a reticulate red blood corpuscle analyzer for obtaining the reticulate red blood cell count and ratio; and the SP-1 is a smeared sample generator for preparing smeared samples of blood by the wedge method.

The rack conveyed by the conveyor unit 14 is stopped before the blood analyzer 18.

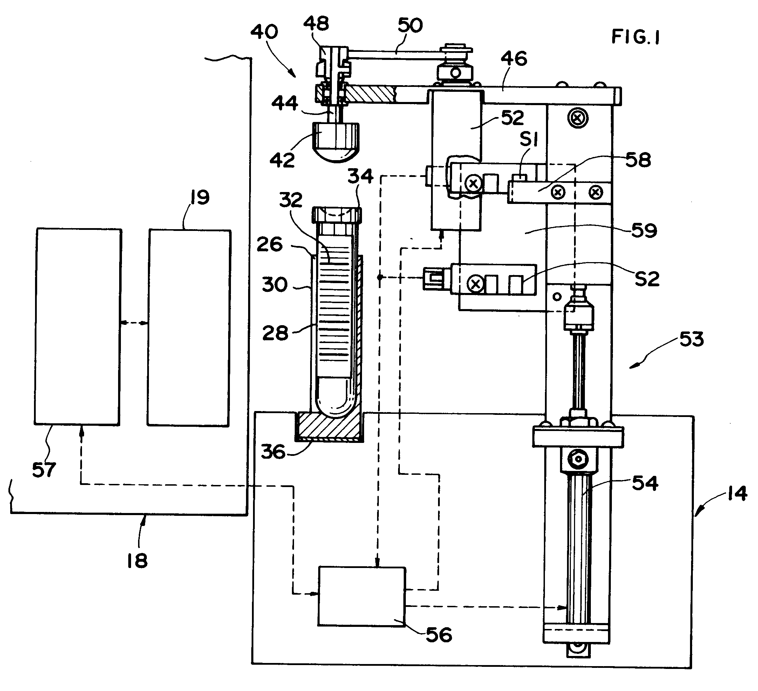

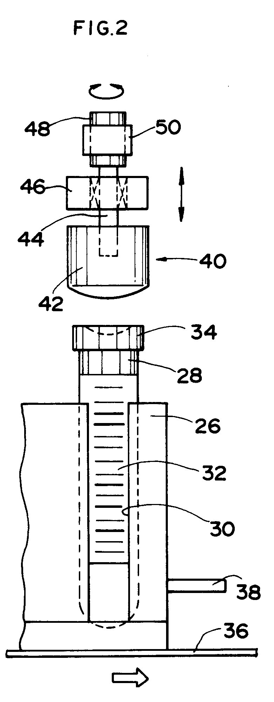

Fig. 1 shows an embodiment of the apparatus of the invention, which is a side view around the blood analyzer 18 and conveyor unit 14 (as seen from the direction of arrow A in Fig. 3). Fig. 2 is a magnified view around the sample container, showing the sample rack 26 on the conveyor unit from the blood analyzer 18 side (as seen from the direction of arrow B in Fig. 3). In this embodiment, the rubber plug is fitted. If the rubber plug is removed, the bar code may still be read.

The rack 26 coming in from the left side in Fig. 2, riding on the belt 36, abuts against, for example, the contact member 38, and is stopped at a specified position. By the bar code reader 19 incorporated in the front portion of the blood analyzer 18, the bar code of the sample container 28 is read, but the bar code label 32 is not always located at the same position. For example, the sample container may be rotated during conveyance. Thus, if the bar code label is not facing the opening 30 of the rack 26, the bar code cannot be read. It is therefore necessary to arrange to read the bar code label 32 wherever it may be located. This is achieved by rotating the sample container 28.

If, however, the label is not glued correctly (for example, if the end of the label is peeled off slightly or the label is creased), the label may be caught in the sample rack, and the sample container may not be rotated.

It is known that this problem may be solved by rotating the sample container not only in one direction but also in the other direction.

Numeral 40 is an example of rotary means for the sample container. Numeral 42 is a columnar elastic member made of rubber or synthetic resin, slightly bulged at the bottom, and a shaft 44 is provided in the center of the elastic member. The shaft 44 is rotatably supported by a supporter 46 through a bearing. A pulley 48 is also fitted to the shaft 44, and a timing belt 50 extends round the pulley 48, and the elastic member 42 is rotated by a driving source 52, e.g. a motor. The supporter 46 is designed to reciprocate linearly in the vertical direction by a driving source 54, e.g. an air cylinder. The driving sources 52, 54 are controlled by the rotational/up and down movement control means 56.

First, as the driving source 54 is put in action, the rotary means 40 moves down, and the elastic member 42 abuts against the rubber plug 34 of the sample container 28. Next, the driving source 52 is put in action, and the elastic member 42 begins to rotate slowly in one direction, while the sample container 28 also rotates slowly. The rotating speed is 30 to 60 rpm.

At this time, by a command from the reading control means 57, the bar code reader 19 is put in action, and reads the bar code of the rotating sample container. If the sample container does not rotate and the bar code cannot be read, the driving source is rotated in the reverse direction by a signal from the control means 57, 56, and the sample container is rotated in the reverse direction. Then the bar code is read again.

If the bar code label is not glued correctly, it may be possible to rotate in reverse direction if failing in one direction.

Besides, by the rotation of the sample container, the unglued portion of the bar code label may be forced into place as it passes through the gap between the sample container and the sample rack.

Besides, the bottom of the elastic member 42 is formed approximately in an arc form. This is intended to raise the contact performance with the rubber plug of the sample container or the upper open end (without rubber plug) of the sample container, thereby decreasing uneven rotation.

Meanwhile, a light interrupting plate 58 and sensors S1, S2 (for example, photo interrupters) are monitoring the upward-downward motion of the rotary means 40. Usually, the light interrupting plate 58 is located by the sensor S1 and, while the elastic member 42 is abutting against the rubber plug 34 of the sample container 28, the light interrupting plate 58 is located between the sensor S1 and sensor S2. Without sample container, the light interrupting plate 58 is by the sensor S2, so that the presence or absence of the sample container may be judged. Thus, the bar code may be read easily and securely. Meanwhile, numeral 59 is a plate for mounting the sensors S1, S2.

After the bar code is read, the contact member 38 moves to the right in Fig. 2 by one sample length, and the rack 26 also moves by one sample length, and the sample is agitated and stirred. The rack is moved transversely by one sample length, and the agitated sample container is taken out, and the sample is sucked out by a suction part having a thin tube shaped like a syringe needle. Then the blood corpuscles are analyzed. In this way, the rack is intermittently sent sideways by one sample length, and similar processing is done sequentially. When processing of 10 samples, i.e. one rack, is over, the rack is further conveyed to the left in Fig. 3, and in the next blood analyzer 20, such as reticulate red blood corpuscle analyzer, reading of bar code by bar code reader 21, agitation and suction of sample, and analysis are carried out sequentially, as at blood analyzer 18.

The above described embodiment offers the following effects.
(1) If gluing of the bar code label is imperfect, the code may be read favorably regardless of the label position.
(2) If the label is glued imperfectly, the sample container is rotated in whichever direction is possible so that the bar code may be read securely.
(3) When the bottom of the elastic member is the contact of the sample container convex, with the rubber plug or the upper open end of the sample container may be increased so that uneven rotation may be reduced.

## Claims

1. An identification code reader for reading an identification code (32) on a sample container (28) in a sample rack (26), the identification code reader comprising:
a driving member (42) for driving the sample container (28);
rotary means (48, 50, 52) for rotating the driving member (42);
up and down movement means (46, 54) for moving the driving member (42) up and down;
rotational/up and down movement control means (56) for controlling the rotary means (48, 50, 52) and up and down movement means (46, 54);
identification code reader means (19) for reading the identification code (32) on the sample container (28); and
reading control means (57) connected to the identification code reader means (19) for controlling reading of the identification code (32) as the sample container (28) is rotated;
the reading control means (57) and rotational/up and down movement control means (56) being arranged to bring the driving member (42) into engagement with the sample container (28), and to rotate the sample container (28) in a forward direction whilst the reader means (19) attempts to read the identification code (32);
characterized in that the reading control means (57) and rotational/up and down movement control means (56) are arranged, if the code (32) is not read whilst the sample container is rotated in the forward direction, to rotate the sample container (28) in a reverse direction whilst the reader means (19) again attempts to read the identification code (32).

2. An identification code reader according to claim 1, wherein the driving member (42) is an elastic member (42) engageable with the top of the sample container (28).

3. An identification code reader according to claim 2, wherein the bottom of the elastic member (42) is convex.

4. A method of reading an identification code (32) on a sample container (28) in a sample rack (26), comprising the steps of:
lowering a driving member (42) into engagement with the upper end of the sample container (28) whilst the sample container is sitting in the sample rack (26);
using the driving member (42) to rotate the sample container (28) in a forward direction and making a first attempt to read the code (32) through an opening (30) in the side of the sample rack (26); and,
if the first reading attempt is not successful, using the driving member (42) to rotate the sample container (28) in a reverse direction and making a second attempt to read the code (32) through the opening (30) in the side of the sample rack (26).

5. A method according to claim 4, wherein the identification code (32) is located on a label stuck on the sample container (28).

## Patentansprüche

1. Erkennungscode-Leser zum Lesen eines Erkennungscodes (32) auf einem Probenbehälter (28) in einem Probengestell (26), wobei der Erkennungscode-Leser aufweist:
ein Antriebsteil (42) zum Antreiben des Probenbehälters (28);
Drehmittel (48, 50, 52) zum Drehen des Antriebsteils (42);
Auf- und Abbewegungsmittel (46, 54) zum Bewegen des Antriebsteiles (42) nach oben und nach unten;
Dreh-/Auf- und Abbewegungssteuermittel (56) für das Steuern des Drehmittels (48, 50, 52) und das Mittel (46, 54) für die Bewegung nach oben und nach unten;
Erkennungscode-Lesermittel (19) zum Lesen des Erkennungscodes (32) auf dem Probenbehälter (28); und
Lesesteuermittel (57), die mit dem Erkennungscode-Lesermittel (19) verbunden sind für die Steuerung des Lesens des Erkennungscodes (32), wenn der Probenbehälter (28) gedreht wird;
wobei das Lesersteuermittel (57) und das Dreh-/Auf- und Abbewegungssteuermittel (56) angeordnet sind, um das Antriebsteil (42) mit dem Probenbehälter (28) in Eingriff zu bringen und den Probenbehälter (28) in einer Vorwärtsrichtung zu drehen, während das Lesermittel (19) versucht, den Erkennungscode (32) zu lesen;
dadurch gekennzeichnet, daß das Lesesteuermittel (57) und das Dreh-/Auf- und Abbewegungssteuermittel (56) angeordnet sind, wenn der Code (32) nicht gelesen wird, während der Probenbehälter in der Vorwärtsrichtung gedreht wird, um den Probenbehälter (28) in einer umgekehrten Richtung zu drehen, während das Lesemittel (19) wiederum versucht, den Erkennungscode (32) zu lesen.

2. Erkennungscode-Leser nach Anspruch 1, wobei das Antriebsteil (42) ein elastisches Teil (42) ist, welches mit der Oberseite des Probenbehälters (28) in Eingriff bringbar ist.

3. Erkennungscode-Leser nach Anspruch 2, wobei der Boden des elastischen Teils (42) konvex ist.

4. Verfahren zum Lesen eines Erkennungscodes (32) auf einem Probenbehälter (28) in einem Probengestell (26), welches die Schritte aufweist:
Absenken eines Antriebsmittels (42) in Eingriff mit dem oberen Ende des Probenbehäiters (28), während der Probenbehälter in dem Probengestell (26) sitzt;
Benutzen des Antriebsteils (42), um den Probenbehälter (28) in einer Vorwärtsrichtung zu drehen, und Durchführung eines ersten Versuches, den Code (32) durch eine Öffnung (30) in der Seite des Probengestelles (26) zu lesen; und
wenn der erste Leseversuch nicht erfolgreich ist, Benutzen des Antriebsteils (42), um den Probenbehälter (28) in einer umgekehrten Richtung zu drehen und einen zweiten Versuch zu unternehmen, um den Code (32) durch die Öffnung (30) in der Seite des Probengestelles (26) zu lesen.

5. Verfahren nach Anspruch 4, wobei der Erkennungscode (32) auf einem Etikett angeordnet ist, welches auf dem Probenbehälter (28) befestigt ist.

## Revendications

1. Lecteur de code d'identification pour lire un code d'identification (32) sur un récipient d'échantillon (28) dans un casier à échantillons (26), le lecteur de code d'identification comprenant :
un élément d'entraînement (42) pour entraîner le récipient d'échantillon (28) ;
un moyen rotatif (48, 50, 52) pour faire tourner l'élément d'entraînement (42) ;
un moyen de déplacement vers le haut et vers le bas (46, 54) pour déplacer l'élément d'entraînement (42) ;
un moyen de commande de déplacement en rotation/vers le haut et vers le bas (56) pour commander le moyen rotatif (48, 50, 52) et le moyen de déplacement vers le haut et vers le bas (46, 54) ;
un moyen lecteur de code d'identification (19) pour lire le code d'identification (32) sur le récipient d'échantillon (28) ; et
un moyen de commande de lecture (57) connecté au moyen lecteur de code d'identification (19) pour commander la lecture du code d'identification (32) pendant que le récipient d'échantillon (28) est entraîné en rotation ;
le moyen de commande de lecture (57) et le moyen de commande de déplacement en rotation/vers le haut et vers le bas (56) étant conçus pour amener l'élément d'entraînement (42) en prise avec le récipient d'échantillon (28), et pour faire tourner le récipient d'échantillon (28) dans le sens direct pendant que le moyen lecteur (19) tente de lire le code d'identification (32) ;
caractérisé en ce que le moyen de commande de lecture (57) et le moyen de commande de rotation/déplacement vers le haut et vers le bas (56) sont conçus pour, si le code (32) n'est pas lu pendant que le récipient d'échantillon est entraîné en rotation dans le sens direct, faire tourner le récipient d'échantillon (28) dans le sens inverse pendant que le moyen lecteur (19) tente à nouveau de lire le code d'identification (32).

2. Lecteur de code d'identification selon la revendication 1, dans lequel l'élément d'entraînement (32) est un élément élastique (42) pouvant être en prise avec le dessus du récipient d'échantillon (28).

3. Lecteur de code d'identification selon la revendication 2, dans lequel la base de l'élément élastique (42) est convexe.

4. Procédé pour lire un code d'identification (32) sur un récipient d'échantillon (28) dans un casier à échantillons (26), comprenant les étapes :
d'abaissement d'un élément d'entraînement (42) en prise avec l'extrémité supérieure du récipient d'échantillon (28) tandis que le récipient d'échantillon repose dans le casier à échantillons (26) ;
d'utilisation de l'élément d'entraînement (42) pour faire tourner le récipient d'échantillon (28) dans le sens direct et d'exécution d'une première tentative pour lire le code (32) à travers une ouverture (30) dans le côté du casier à échantillons (26) et,
si la première tentative de lecture n'est pas couronnée de succès, d'utilisation de l'élément d'entraînement (42) pour faire tourner le récipient d'échantillon (28) dans le sens inverse et d'exécution d'une seconde tentative pour lire le code (32) à travers l'ouverture (30) dans le côté du casier à échantillons (26).

5. Procédé selon la revendication 4, dans lequel le code d'identification (32) se trouve sur une étiquette collée sur le récipient d'échantillon (28).
